# EUROPEAN PATENT APPLICATION

(11) **EP 1 980 349 A2**
(43) Date of publication of application: **15.10.2008**
(21) Application number: 08005589.0
(22) Date of filing: 26.03.2008
(51) Int. Cl.: B23B 27/04

(54) **Cutting insert**

(30) Priority: 30.03.2007 JP 2007091952; 30.03.2007 JP 2007094884; 23.01.2008 JP 2008012975
(71) Applicant: Mitsubishi Materials Corporation, Chiyoda-ku Tokyo (JP)
(72) Inventor: Nagaya, Hidehiko, 1511 Furmagi Joso-shi Ibaraki-ken (JP); Aso, Norio, 1511 Furmagi Joso-shi Ibaraki-ken (JP); Imai, Yasuharu, 1511 Furmagi Joso-shi Ibaraki-ken (JP)
(74) Representative: HOFFMANN EITLE

(57) **Abstract**

A cutting insert has an insert body having a shaft-shape, wherein a cutting edge portion having a square rake face is formed on an end portion of the insert body, and wherein the rake face includes; a pair of side cutting edges extending in a longitudinal direction of the insert body; a front cutting edge extending in a transverse direction perpendicular to the longitudinal direction between each front ends of the side cutting edges; and a pair of protruded streaks extending toward a corner portion at which each of the side cutting edges intersects the front cutting edge, each of the protruded streaks including an outer wall face having a protruded curved face which faces the adjacent side cutting edge and protrudes toward the side cutting edge as seen in a direction facing the rake face and perpendicular to the longitudinal direction.

## Description

### BACKGROUND OF THE INVENTION

### Field of the Invention

The present invention relates to a cutting insert which is used in turning operations of work materials for grooving, cutting-off, or the like.

Priority is claimed on Japanese Patent Application No. 2007-091952, filed March 30, 2007, Japanese Patent Application No. 2007-094884, filed March 30,2007, and Japanese Patent Application No. 2008-012975, filed January 23, 2008, the contents of which are incorporated herein by reference.

### Description of the Related Art

A cutting insert for grooving, cutting-off or the like used in turning operations is proposed, for example, in Japanese Unexamined Patent Application, First Publication No. H09-174308 (hereinafter, JP H09-174308), so as to have a pair of ridges extending substantially in the longitudinal direction on a top surface of a cutting head, a chip breaker pit which is provided between the ridges, a break line extending between a front pit and a rear pit of the chip breaker pit, and a pair of burls disposed between the break line and a major cutting edge, so that the vicinity of a connecting point of the break line with the ridges thrusts chips as a squeezing zone.

In the cutting insert of JP H09-174308, a wall face (outer wall face) of each of the pair of ridges that faces a side cutting edge is formed so as to extend straight in the longitudinal direction so that each of front end portions of the ridges extends at a distance with each other toward a corner portion in which the front major cutting edge, i.e., a front cutting edge meets a side cutting edge.

However, in the cutting insert of JP H09-174308, when grooving a work material using the front major cutting edge by advancing the cutting insert in the longitudinal direction and then broadening the groove width using the side cutting edge by feeding in a traverse direction, chips generated at the side cutting edge collide as a whole against the outer wall face of the ridge which extends straight in the longitudinal direction and is then bent reentrant with respect to the side cutting edge toward the corner portion.

Therefore, the reentrant portion of the outer wall face is clogged with the chips pushed therein; as a result, the chips cannot be smoothly disposed and a cutting resistance would be increased.

### SUMMARY OF THE INVENTION

The present invention is achieved in view of the above-mentioned circumstances and has an object to provide a cutting insert which is used for grooving and cutting-off of a work material as mentioned above, in which chips can be smoothly disposed without increasing a cutting resistance even when a cutting insert is fed in a traverse direction in order to broaden a groove width in the grooving operation.

In order to solve the above-mentioned problem and achieve the object, the present invention provides a cutting insert having an insert body having a shaft-shape, wherein a cutting edge portion having a square rake face is formed on an end portion of the insert body, and wherein the rake face includes: a pair of side cutting edges extending in a longitudinal direction of the insert body; a front cutting edge extending in a transverse direction perpendicular to the longitudinal direction between each of front ends of the side cutting edges; and a pair of protruded streaks extending toward a corner portion at which each of the side cutting edges intersects the front cutting edge, each of the protruded streaks including an outer wall face having a protruded curved face which faces the adjacent side cutting edge and protrudes toward the side cutting edge as seen in a direction facing the rake face and perpendicular to the longitudinal direction.

According to the cutting insert constructed as above, the protruded streak has the outer wall face which is the protruded curved face protruding toward the adjacent side cutting edge. Therefore, the chips generated at the side cutting edge by the cutting insert which is fed in a transverse direction in order to broaden groove width collide with the outer wall face only at a portion protruding toward the side cutting edge and the vicinity thereof, and the chips do not entirely collide with the outer wall face.

The chips that collided with the protruded curved outer wall face are bent in the width direction thereof so as to extend along the protruded curved face at the collision portion, and bent also in the flow direction by contacting with the outer wall face; therefore, the chips are easily at the bent portions in the width direction and the flow direction. As a result, according to the above cutting insert, it is possible to suppress an increase of a cutting resistance especially in the above cutting operation, without clogging of the chips, and to dispose the chips smoothly and efficiently.

The outer wall face having the protruded curved face gradually approaches and is separated from the adjacent side cutting edge from a front end toward a rear end of the side cutting edge as seen in a direction facing the rake face and perpendicular to the longitudinal direction. Therefore, when the flow direction of the chips generated at the side cutting edge is varied, in a case, for example, in which the insert body is fed in the transverse direction while receding in order to form a groove having an inclined groove wall face on a work material, the protruded curved outer wall face is necessarily located to face the flow direction. Accordingly, the chips always collide with the outer wall face whichever direction the chips flow, so that it is possible to dispose them smoothly,

Especially in such a case, since the protruded curved outer wall face is formed as the circular arc shape as seen in the direction facing the rake face and perpendicular to the longitudinal direction, the chips can collide with the outer wall face even though they flow out in any direction; therefore, it is possible to dispose the chips stably.

It is unnecessary that the entire outer wall faces of the protruded streaks be formed into a protruded curved surface as seen in the direction facing the rake face and perpendicular to the longitudinal direction. For example, when broadening the groove width after the above grooving by feeding the cutting insert in the transverse direction, chips are always generated at the front end of the side cutting edge; therefore, it is necessary that at least the front end of the protruded streaks be formed into a protruded curved surface. Furthermore, in this case, the outer wall faces of the protruded streaks are formed into a recessed curved face at the rear end with respect to the adjacent side cutting edge. As a result, a pocket into which the chips disposed at the front end are discharged can be secured between the recessed curved outer wall face and the side cutting edge; and further, cutting fluid (coolant) can be efficiently supplied via the pocket to the cutting portion by the cutting edge.

A projection may be formed on each space between the front end of the protruded streaks and the corner portions so that the projection projects with a predetermined distance from the protruded streak, As a result, when broadening the groove width, the chips generated at the side cutting edge, especially by the corner portion, to not collide with the projection and the protruded streak at the spaced area. Therefore, the chips are not entirely resisted; and the cutting resistance of the cutting insert can also be reduced. Furthermore, the chips that collide with the projections which are separated from the protruded streaks and the front ends of the protruded streaks, flow out while being bent in the width direction thereof, and are curled in the flow direction. Accordingly, the chips are easily broken and have low resistance; therefore, it is possible to dispose the chips smoothly and reliably.

Chips which are generated by the front cutting edge are tightly curled in the width direction by colliding and rubbing against the front ends of the pair of protruded streaks and easily broken when only grooving or cutting-off of a work material is performed by advancing the insert body in the longitudinal direction thereof, The protruded streaks are not lost due to abrasion even though they are worn by the rubbing of the chips because the protruded streaks are provided on the rake face having a length that extends toward the corner portion as described above. Furthermore, the heights of the protruded streaks are not varied due to the abrasion, if the protruding heights of the protruded streaks at the front end are constant; accordingly, the chips can be stably and smoothly disposed.

The cutting insert of JP H09-174308 is provided with a pair of burls in the vicinity of the inner faces of the ridges facing each other. Accordingly, when the cutting insert is fed in the longitudinal direction in order to perform only grooving and cutting-off of the work materials using the front major cutting edge, the chips generated at the front major cutting edge collide and rub against the burls, and then the chips flow to the chip breaker pit, As the chips are rubbed, the burls are worn down and the height thereof becomes low; as a result, the burls are lost so that the chips cannot be controlled. Therefore, the tool life of the cutting insert is shortened. Furthermore, the control of the chips becomes unstably along with a process of wearing down of the burls; accordingly, it is difficult to perform a smooth cutting operation.

Furthermore, in the cutting insert of JP H09-174308, the ridges extend in the longitudinal direction, and are formed so that the front ends thereof extend inseparably toward the corner portions. Accordingly, the cutting fluid, which is supplied to the front of the rake face flowing between the ridges and the side cutting edges, is guided by the front end portions of the ridges and flows out only toward the side cutting edges. Therefore, when the cutting heat is apt to persist, for example, when grooving or cutting-off of hard materials or materials having low thermal conductivity is performed, the cutting fluid cannot be sufficiently supplied to the corner portion at the front major cutting edge. As a result, damage and adhesion can easily occur due to the heat of the cutting edge at the corner portion depending on the work materials; furthermore, there is a concern that the groove wall face and the cutting face of the work material will deteriorate in accuracy and quality.

However, considering the above problem, a projection can be formed between the front end of each of the protruded streaks at the corner portion and the corner portion separately from the protruded streaks, with respect to the pair of protruded streaks extending toward the corner portions in which the pair of side cutting edges and the front cutting edge intersect. As a result, the cutting fluid, which is supplied to the front end portion between the protruded streaks and the side cutting edges on the rake face, flows into the corner portion at the front cutting edge via a space between the projections and the protruded streaks. Therefore, when grooving or cutting-off of the work materials is performed as above, the cutting fluid can be sufficiently supplied to the corner portions at the front cutting edge; and the lubrication and cooling can be performed.

The projection may be a undirectional shape such as, for example, a spherical shape, a conical shape, or a frustum shape protruding between the front ends of the protruded streaks at the corner portion and the corner portion. Furthermore, if the projection is formed so as to extend from the front ends of the protruded streaks toward the corner portion, when broadening the groove by feeding the cutting insert in the transverse direction, chips which are generated at the side cutting edge in the corner portion can be guided by the projection to a rear end of the cutting edge portion. Accordingly, the chips can be prevented from contacting and damaging a bottom surface of the groove.

However, if the projection is formed so as to extend from the front ends of the protruded streaks toward the corner portion, it is preferable that the projection extend so as to intersect an axis of the longitudinal direction at an angle of 15° to 75° seen in the direction facing the rake face perpendicular to the longitudinal direction. If the angle is below the above range, it is possible for the chips not to be guided properly toward the rear end of the cutting edge portion. On the other hand, if the angle exceeds the above range, the chips collide with the projection at a small area and cannot be guided stably; furthermore, there is a possibility of the projection being worn down in an early stage.

When forming the projection so it extends from the front ends of the protruded streaks toward the corner portion, the projection may be formed so as to extend continuously. In addition, a plurality of projections may be provided between each front end of the protruded streaks and the corner portion, separated from each other and extending discontinuously. In this case, the cutting fluid can be supplied to the front cutting edge between the projections; therefore, lubrication and cooling can efficiently be performed.

According to the cutting insert of the present invention as described above, even when broadening the groove width by feeding the cutting insert in the transverse direction after grooving, all the chips are prevented from colliding against the protruded streaks, thereby preventing the increase of the cutting resistance and the clogging of the chips; accordingly, the chips can be broken and smoothly disposed.

### BRIEF DESCRIPTION OF THE DRAWINGS

FIG. 1 is a perspective view showing a first embodiment of the present invention.
FIG. 2 is a plan view showing the embodiment of FIG. 1 as seen in a direction perpendicular to a longitudinal direction of a cutting insert shown in FIG. 1 from a direction facing a rake face 5.
FIG. 3 is a side view showing the embodiment of FIG. 1.
FIG. 4 is a bottom view showing the embodiment of FIG. 1.
FIG. 5 is a front view showing the embodiment of FIG 1.
FIG 6 is an enlarged perspective view showing a cutting edge portion 2 of the embodiment of FIG. 1.
FIG. 7 is an enlarged plan view showing the cutting edge portion 2 in FIG. 2.
FIG. 8A is a sectional view showing a variation of a height H of a burl of JP H09-174308 owing to wear.
FIG. 8B is a sectional view showing a variation of a height H of a protruding streak 11 of the first embodiment owing to wear, corresponding to a sectional view taken along the Y-Y line of FIG. 7.
FIG. 9 is an enlarged plan view showing a cutting portion 2 of a second embodiment according to the present invention as seen in a direction facing a rake face 5 perpendicular to a longitudinal direction of the cutting insert.
FIG. 10 is an enlarged plan view showing a cutting edge portion 2 of a first modified embodiment of the first embodiment as seen in a direction facing a rake face 5 perpendicular to a longitudinal direction of a cutting insert.
FIG. 11 is an enlarged plan view showing a cutting edge portion 2 of a first modified embodiment of the second embodiment as seen in a direction facing a rake face 5 perpendicular to a longitudinal direction of a cutting insert.
FIG. 12 is an enlarged plan view showing a cutting edge portion 2 of a second modified embodiment of the first embodiment as seen in a direction facing a rake face 5 perpendicular to a longitudinal direction of a cutting insert.
FIG. 13 is an enlarged plan view showing a cutting edge portion 2 of a second modified embodiment of the second embodiment as seen in a direction facing a rake face 5 perpendicular to a longitudinal direction of a cutting insert.
FIG. 14 is an enlarged plan view showing a cutting edge portion 2 of a third modified embodiment of the first embodiment as seen in a direction facing a rake face 5 perpendicular to a longitudinal direction of a cutting insert.
FIG. 15 is an enlarged plan view showing a cutting edge portion 2 of a third modified embodiment of the second embodiment as seen in a direction facing a rake face 5 perpendicular to a longitudinal direction of a cutting insert.
FIG. 16 is an enlarged plan view showing a cutting edge portion 2 of a fourth modified embodiment of the first embodiment as seen in a direction facing a rake face 5 perpendicular to a longitudinal direction of a cutting insert.
FIG. 17 is an enlarged plan view showing a cutting edge portion 2 of a fourth modified embodiment of the second embodiment as seen in a direction facing a rake face 5 perpendicular to a longitudinal direction of a cutting insert.

### BRIEF DESCRIPTION OF THE REFERENCE SYMBOLS

1, 101, 201, 301, 401, 501, 601, 701, 801, 901: insert body
2: cutting edge portion
3: side cutting edge
4: front cutting edge
5: rake face
6: corner portion
11: protruded streak
11A: first rear end portion of the protruded streak 11
11B: second rear end portion of the protruded streak 11
11C: second front end portion of the protruded streak 11
11D: first front end portion of the protruded streak 11
12, 21-23: projection
13: inner wall face of the protruded streak 11
14: outer wall face of the protruded streak 11
15: protruded end face of the protruded streak 11
111: protruded streak
111A; first rear end portion of the protruded streak 111
111B: second rear end portion of the protruded streak 111
111C: second front end portion of the protruded streak 111
111D: first front end portion of the protruded streak 111
16, 116, 216, 316: protruded end face of the projection 12, 21-23
17: peripheral wall face of the projection 12, 21-23
18: recessed portion between the protruded streaks 11, 111 and the projections 12,21-23 218: recessed portion between the projections 22
L: axis of the insert body 1
R1: radius of circular arc of an intersecting ridge of the outer wall face 14 and the protruded end face 15 at the second front end portion 11C as seen in a direction facing the rake face 5 perpendicular to a longitudinal direction of the insert body 1
R2: radius of circular are of an intersecting ridge of the inner wall face 13 and the protruded end face 15 at the second front end portion 11C as seen in a direction facing the rake face 5 perpendicular to a longitudinal direction of the insert body 1
R12: radius of circular arc of an intersecting ridge of the inner wall face 13 and the protruded end face 115 at the second front end portion 111C as seen in a direction facing the rake face 5 perpendicular to a longitudinal direction of the insert body 301
W: maximum width of the rake face 5
θ: angle of an extending direction of the projection 12 intersecting to the axis L extending in the longitudinal direction of the insert body as seen in a direction facing the rake face 5 perpendicular to a longitudinal direction of the insert body

### DETAILED DESCRIPTION OF THE INVENTION

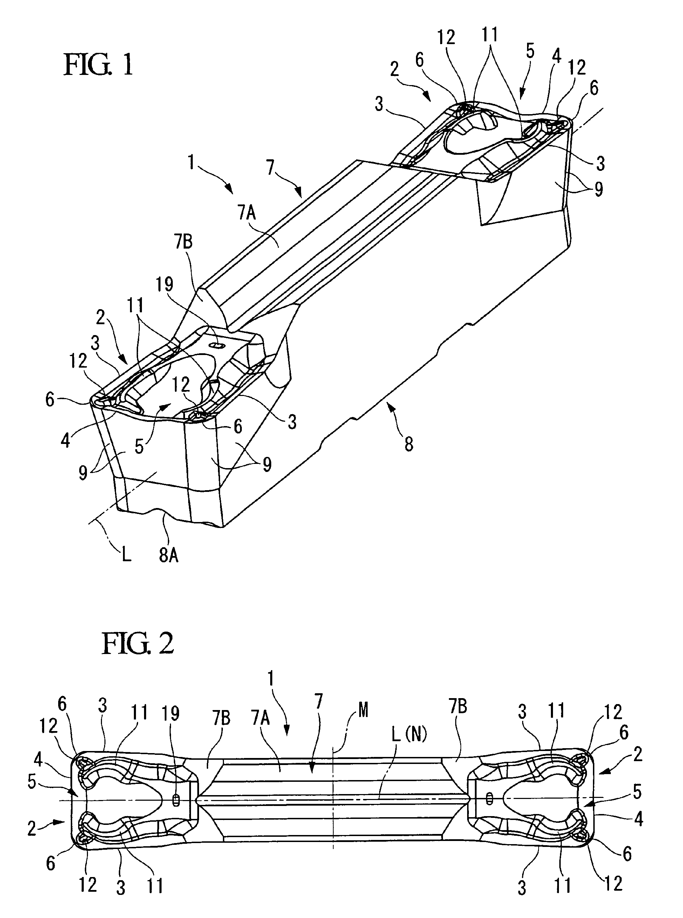

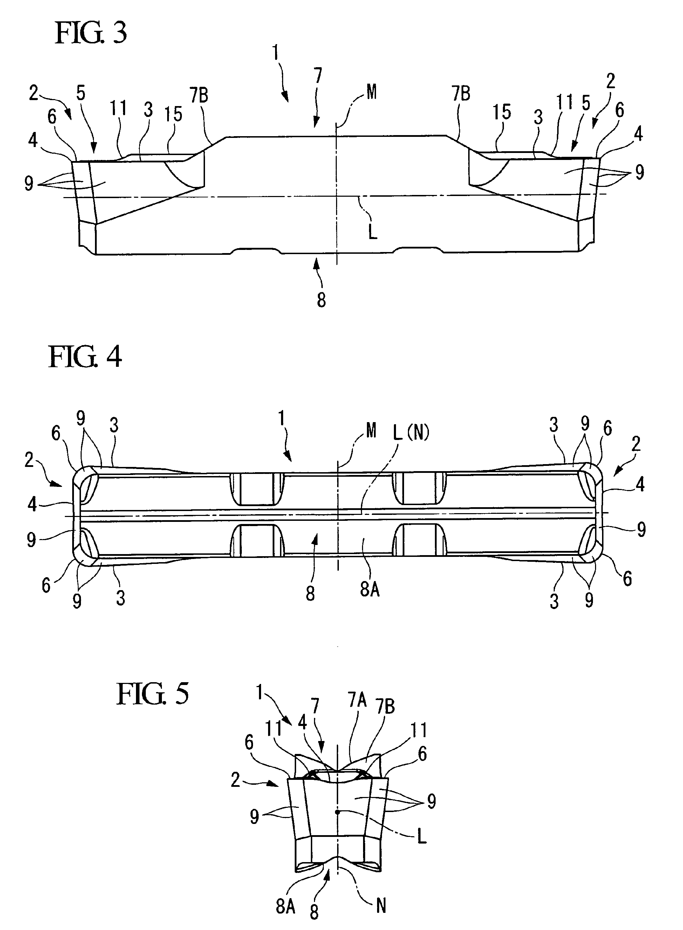

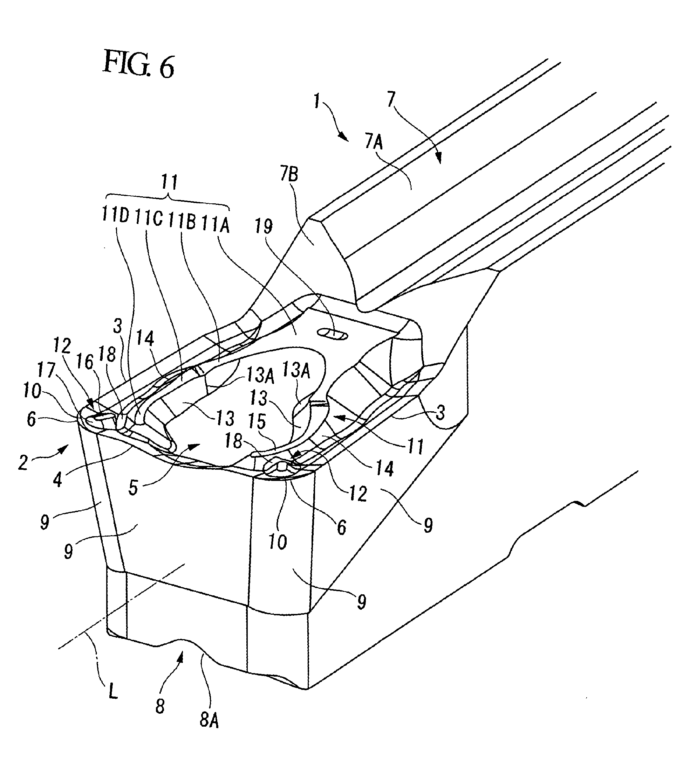

FIGS. 1 to 7 show a first embodiment of a cutting insert according to the present invention. An insert body 1 of the present embodiment is formed from a hard material such as cemented carbide or the like, and has substantially a square shaft shape (a square pillar shape) extending along an axis L. The insert body 1 is formed so as to substantially be symmetrical about a plane M perpendicular to the axis L at a center in a longitudinal direction (i.e., the axis L direction; in other words, a left and right direction of FIGS. 2 to 4) of the insert body 1. Further, the insert body 1 is formed so as to be symmetrical about a plane N at a center in a width direction (i.e., an up and down direction in FIGS. 2 and 4) of the insert body 1. The plane N is perpendicular to the plane M, includes the axis L, and extends in a thickness direction (i.e., an up and down direction in FIGS. 3 and 5) of the insert body.

A cutting edge portion 2 is formed at each of end portions of the insert body 1 in the longitudinal direction. Both cutting edge portions 2 have the same configuration. A rake face 5 is formed on the cutting edge portion 2 into substantially a rectangular shape extending in the longitudinal direction so as to face the thickness direction, and has a pair of side cutting edges 3 extending in the longitudinal direction and a front cutting edge 4 extending between the side cutting edges 3 in the width direction at a ridge portion thereof. In addition, each of the corner portions 6 which is formed at an intersection between the front cutting edge 4 and the side cutting edges 3 is formed in a protruding quarter circular arc shape which is tangential to the front cutting edge 4 and the side cutting edges 3 in a plan view as seen in a direction facing the rake face 5 and perpendicular to the longitudinal direction.

An upper face 7 of the insert body 1 that faces the same direction as the rake face 5 in the thickness direction between both cutting edge portions 2 in the longitudinal direction projects from the cutting edge portions 2 in the width direction as shown in FIG 3. In addition, installation grooves 7A and 8A having a substantially depressed V-sectional shape extending along the entire longitudinal direction are formed at the upper face 7 and a lower face 8 opposite to the upper face 7 respectively. The installation grooves 7A and 8A are held between a pair of jaws of an insert-installation seat formed on a holder of an insert-removable turning tool. The jaws face each other, and form a protruding V-shape section with each other. The cutting insert is held by the holder and used for grooving or cutting-off of a work material. End faces 7B of the upper face 7 are inclined toward the lower face 8 as they approach the cutting edge portions 2.

In addition, a front end face of the cutting edge portion 2 facing the longitudinal direction is a flank face 9 of the front cutting edge 4. Both side faces of the cutting edge portion 2 facing the width direction are the flank faces 9 of the pair of the side cutting edges 3. The cutting insert of the present embodiment is a positive-type insert in which the flank faces 9 including crossing ridge portions connected to the corner portions 6 are inclined so as to gradually recede from the rake face 5 toward the lower face 8. End faces and side faces of the insert body 1 except for the flank faces 9 of the cutting edge portions 2 are flat faces extending in the thickness direction and parallel with each other.

As shown in FIG. 3, each of the side cutting edges 3 including the corner portion 6 is formed so as to extend on a plane perpendicular to the width direction. The pair of side cutting edges 3 forms a back taper of the cutting insert by being slightly inclined so as to approach each other in the width direction from the corner portions 6 toward the rear end of the cutting edge portion 2. The front cutting edge 4 is formed so as to extend linearly as seen in the plan view. Meanwhile, in the thickness direction, the front cutting edge 4 is formed so that both ends thereof at the corner portions 6 extend on the same plane as the corner portions 6 and the side cutting edges 3. Further, the front cutting edge 4 is formed so that a middle portion thereof in the width direction is slightly depressed in the thickness direction and forms a recessed curved line. In addition, an extremely narrow land 10 is formed at at least each of the corner portions 6. The rake face 5 is a positive rake face which is inclined so as to gradually recede in the thickness direction at a distance from the side cutting edges 3, the front cutting edge 4, and the corner portions 6 toward the inside thereof.

A pair of protruded streaks 11, each extending toward the corner portion 6 and protruding from the rake face 5 in the thickness direction, is formed further inside the rake face 5 which is the positive rake face. In the present embodiment, a projection 12 protruding in the thickness direction is formed at each of spaces between front ends at the corner portions 6 of the protruded streaks 11 and the corner portions 6 separately from the protruded streaks 11. The protruded streaks 11 and the projections 12 are also separated from the side cutting edges 3, the front cutting edge 4, and the corner portions 6.

The protruded streaks 11 have inner wall faces 13 inward of the rake face 5 facing with each other as seen in the plan view and outer wall faces 14 facing the side cutting edges 3 connected to the corner portions 6 to which the protruded streaks 11 extend. That is, the outer wall faces 14 face the opposite direction each other. In the present embodiment, the highest protruded ridges in the thickness direction in which the inner wall faces 13 and the outer wall faces 14 are connected are protruded end faces 15. In each of the protruded streaks 11, the inner wall face 13 and the outer wall face 14 are inclined from the protruded end face 15 so as to be separated from each other as they approach the rake face 5 and are connected to the protruded end face 15 with an obtuse angle.

The pair of protruded streaks 11 extends from a narrower first rear end portion 11A than the end face 7B of the upper face 7 toward the front end of the cutting edge portion 2 with bifurcation so as to be adjacent to each of the side cutting edges 3 which is connected to the corner portion 6 respectively. Second rear end portions 11B are branched from the first rear end portion 11A extending to substantially a middle of the side cutting edges 3 in the longitudinal direction. The protruded streaks 11 at the second rear end portions 11B are formed so as to extend directly toward the corner portions 6 as seen in the plan view in a V-shape. A second front end portion 11C extending from each of the second rear end portions 11B is formed so as to bend convexly toward the adjacent side cutting edge 3 as seen in the plan view.

More specifically, the second front end portion 11C is formed as a convex circular arc shape in the plan view extending from the second rear end portion 11B toward the front end of the cutting edge portion 2 while once approaching the adjacent side cutting edge 3 and then moving away from the side cutting edge 3, Accordingly, the inner wall faces 13 of the protruded streaks 11 at the second front end portions 11C are recessed curved faces which dent toward the side cutting edges 3 adjacent to the protruded streaks 11 as seen in the plan view. On the contrary, the outer wall faces 14 of the protruded streaks 11 at the second front end portions 11C are protruded curved faces protruding toward the side cutting edges 3. Therefore, the recessed curved faces of the inner wall faces 13 and the protruded curved faces of the outer wall faces 14 are curved from the front end toward the rear end of the adjacent cutting edges 3 while gradually approaching and then moving away from the side cutting edges 3 as seen in the plan view

In the present embodiment, intersection ridges of the inner wall faces 13, the outer wall faces 14 of the protruded streaks 11, and the protruded end faces 15 at the second front end portion 11C form circular arc shapes as seen in the plan view. Furthermore, the circular arc of the intersection ridge of the outer wall face 14 and the protruded end face 15 is located so that the center thereof is nearer to the side cutting edge 3 to which the protruded streak 11 is adjacent than to the axis L as seen in the plan view.

Radius R1 of the intersection ridge of the inner wall face 13 and the protruded end face 15, and radius R2 of the intersection ridge of the outer wall face 14 and the protruded end face 15 are set so that the radius R1 of the recessed curved line (recessed circular arc) formed by the intersection ridge of the inner wall face 13 is slightly smaller than the radius R2 of the protruded curved line (protruded circular arc) formed by the intersection ridge of the outer wall face 14. The distance between the inner wall face 13 and the outer wall face 14 is a distance between the intersection ridges, i.e., the width of the protruded end face 15, and is enlarged from the front end of the protruded streak 11 toward the second rear end portion 11B. However, the width of the protruded end face 15 may be set constant at the first front end portion 11D and the second front end portion 11C. Further, the first front end portion 11D of the protruded streak 11 is curved parallel to the protruded circular arc of the corner portion 6 as seen in the plan view. The front end of the first front end portion 11D (the protruded streak 11) is arranged at a position corresponding to an end portion of a recessed curved line of the front cutting edge 4 receding in the thickness direction.

The inner wall face 13 and the outer wall face 14 of the protruded streak 11 at the second rear end portion 11B are concavely bent as seen in the plan view. The inner wall face 13 is formed so that the second rear end portion 11B is concavely bent to a direction forming an obtuse angle with the second front end portion 11C. A meandering portion 13A is formed by intersection of the recessed curved inner wall faces 13 of the second front end portion 11C and the second rear end portion 11B. The meandering portion 13A is formed as a protruded curved face which is smoothly connected to the above recessed curved faces. The distance between the pair of meandering portions 13A of the protruded streaks 11 at the protruded end faces 15 is smaller than the distance in the width direction between the front ends of the protruded streaks 11 at the protruded end faces 15.

The outer wall face 14 at the second rear end portion 11B is formed so as to be smoothly connected to the protruded curved second front end portion 11C and bent with respect to the side cutting edge 3 as seen in the plan view. The recessed curve face of the outer wall face 14 at the second rear end portion 11B is set so that the radius curvature of the recessed curved line of the intersection ridge thereof with the protruded end face 15 is larger than the radius curvature of the protruded circular arc of the outer wall face 14 at the second front end portion 11C. In the present embodiment, the outer wall face 14 of the protruded streak 11A at the first rear end portion 11A is a recessed curved face which is smoothly connected to the outer wall face 14 at the second rear end portion 11B via a protruded curved face.

The protruded end face 15 of the protruded streak 11 from the first rear end portion 11A to the second rear end portion 11B is a flat surface perpendicular to the thickness direction, and is slightly lower in the thickness direction than a groove bottom of the installation groove 7A formed on the upper face 7. Further, as shown in FIG. 3, the protruded end face 15 of the protruded streak 11 at the second front end portion 11C is recessed in the thickness direction while concavely depressed from the meandering portion 13A toward the front end, and then again forms a flat surface perpendicular to the thickness direction and extends to the first front end portion 11D. The protruded end face 15 at the first front end portion 11D is located slightly higher than a plane perpendicular to the thickness direction and including the side cutting edges 3. The rake face 5 further inside the inner wall faces 13 of the protruded streaks 11 is smoothly connected to the inner wall faces 13 and is a recessed curved face which forms a recessed curved line as seen in a sectional view taken along the width and thickness direction.

The projection 12 is located on the bisector of each of the corner portions 6 between the corner portion 6 and the protruded streak 11 at a distance from the corner portion 6 and the protruded streak 11. The projection 12 of the present embodiment has a flat protruded end face 16 and a surrounding wall 17. The surrounding wall 17 is located around the protruded end face 16, intersects with the protruded end face 16 at an obtuse angle, and is inclined so as to gradually be broadened as it approaches the rake face 5. The height of the protruded end face 16 in the thickness direction is the same as the height of the protruded end face 15 of the protruded streak 11 at the first front end portion 11D. Thus, since the projection 12 is separated from the protruded streak 11, a recessed portion 18 is formed between the projection 12 and the protruded streak 11 so as to be recessed in the thickness direction relatively to a portion in which the surrounding wall 17 intersects the outer wall face 14. A bottom face of the recessed portion 18 is a recessed curved face.

The projection 12 of the present embodiment is formed so as to extend toward the corner portion 6 from the first front end portion 11D of the protruded streak 11. In detail, the protruded end face 16 of the projection 12 has an oval shape as seen in the plan view; and a longitudinal axis of the oval extends toward the corner portion 6 while being inclined to outside the width direction as it approaches the front end of the cutting edge portion 2. It is preferable that, as seen in the plan view, the direction of the projection 12 extending toward the corner portion 6 be set so as to intersect in an angle of 15° to 75° with respect to the axis L extending in the longitudinal direction of the insert body 1. The angle of the longitudinal axis of the oval and the axis L in the present embodiment is 30°, which is smaller than an angle of the bisector and the axis L.

The projection 12 is located so that the front end in the axis L direction, especially, the front end of the protruded end face 16 is nearer to the front cutting edge 4 than the protruded streak 11. However, the projection 12 is sufficiently small comparing with the protruded streak 11. For example, the protruded end face 16 having an oval shape has substantially the same width dimension as or smaller than that of the protruded end face 15 of the protruded streak 11. A reference symbol 19 in the drawings denotes a mark to distinguish the cutting edge portions 2 formed at both ends of the insert body 1. The mark 19 of the present embodiment is a recessed portion on the protruded end face 15 of the protruded streak 11 at the first rear end portion 11A and is formed only on one of the pair of the cutting edge portions 2.

With the cutting insert configured as described above, grooving or cutting-off of the work material is performed by the front cutting edge 4 and the corner portions 6 at both ends of the cutting edge portion 2 while advancing the insert body 1 in the axis L direction. In this case, chips are generated by the front cutting edge 4 and the corner portions 6 and flow out in the axis L direction. The chips collide with the projection 12 at the forefront in the axis L direction and are guided inward in the width direction. Then, the chips collide with and are rubbed with the first front end portion 11D of the protruded streak 11, and are resisted. As a result, the chips are bent and curled in the width direction. In addition, the chips are curled in the width direction since the front cutting edge 4 is recessed at the middle portion in the width direction.

The curled chips in the width direction scratch the rake face 5, which is a recessed curved face; in the meantime, the chips are further curled in the width direction and also in the axis L direction, i.e., the flowing out direction, and flow out to the second rear end portion 11B of the protruded streak 11. The inner wall face 13 of the protruded streak 11 at the second front end portion 11C of the present embodiment has a recessed curved face which is depressed toward the side cutting edge 3. Furthermore, the space between the inner wall faces 13 of the pair of the protruded streaks 11 is narrow at the meandering portion 13A. Therefore, colliding with the meandering portion 13A, the chips are further resisted in the width direction and the flowing direction in which the chips are curled as mentioned above; as a result, the chips are broken and disposed.

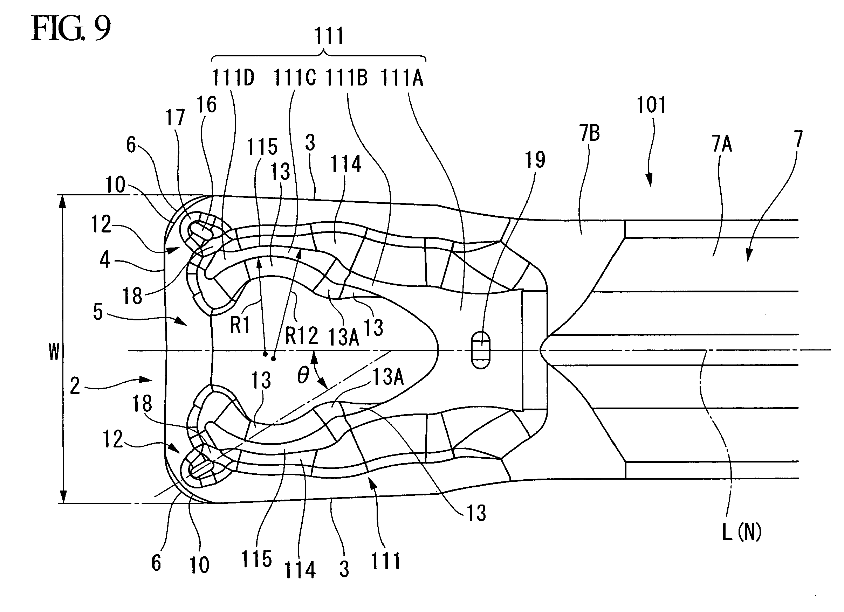

Furthermore, when grooving or cutting-off is operated by advancing the insert body 1 in the longitudinal direction (i.e., the axis L direction), the chips are resisted and curled by colliding with and rubbing with the first front end portion 11D of the protruded streak 11. The frictional resistance causes an abrasion on the protruded streak 11; however, it is not worn flat entirely since it is formed so as to have a length extending toward the corner portion 6 on the rake face 5. If a burl (a boss) of JP H09-174308 is resisted by the chips, as shown in FIG 9A, a height of a burl B is gradually reduced by increasing the abrasion; as a result, the burl B disappear at last. Note, the other portions of the burl B in FIG. 9A are denoted by the same reference symbols as the first embodiment shown in FIG. 9B, and the description thereof is omitted.

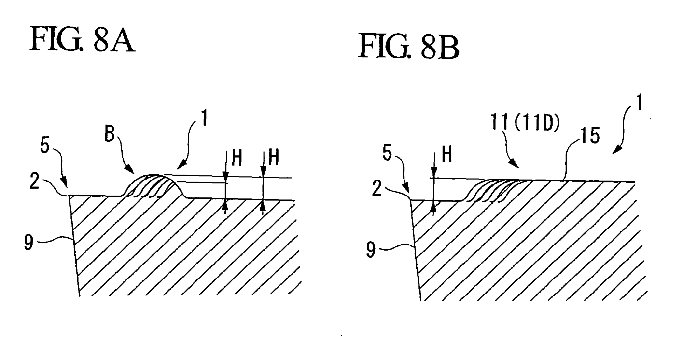

If the protruded streak 11 of the cutting insert is rubbed with the chips, as shown in FIG. 8 B, even though the first front end portion 11D is receded by the abrasion it is not completely worn out. In addition, in the present embodiment, the protruded end face 15 of the first front end portion 11D of the protruded streak 11 is a flat plane perpendicular to the thickness direction. Therefore, as shown in FIG. 8B, the height H of the protruded end face 15 is not changed even though it is receded by the abrasion. Accordingly, since a constant frictional resistance can be continually given to the chips, the chips can be smoothly disposed and a cutting insert having a long tool life can be provided.

When grooving is operated, the insert body 1 is advanced in the axis L direction so that a groove is formed into a prescribed depth, and then the insert body 1 is fed in the width direction (i.e., transverse direction) so as to broaden the groove width; cutting is operated by the side cutting edge 3 and the corner portion 6 which advance in the width direction. The chips which are generated at the side cutting edge 3 and the connected corner portion 6 flow out from this corner portion 6 in the width direction of the insert body 1 with a width at the prescribed depth, collide against the outer wall face 14 of the protruded streak 11 and the projection 12 adjacent to the above-mentioned side cutting edge 3 in the present embodiment, and are disposed.

In the cutting insert having the above structure, the outer wall face 14 of the protruded streak 11 at the second front end portion 11C is a protruded curved face which protrudes toward the adjacent side cutting edge 3. Therefore, the chips generated at the side cutting edge 3 collide only against a portion of the outer wall face 14 that adjacent to the side cutting edge 3 in the flow direction. The chips which collide against the outer wall face 14 are bent in the width direction thereof along the protruded curved face so as to protrude. The chips bent in the width direction further flow out while rubbing the outer wall face 14, and are further bent due to a resistance in the flow direction. As a result, the chips are bent by easily being broken due to a stress at the bent portion in the width direction and the flow direction, and are disposed.

According to the above-mentioned cutting insert, even when the insert body 1 is fed in the width direction in order to broaden the groove width, the entire of chips does not collide against the outer wall face 14 of the protruded streak 11 as above-mentioned. Therefore, it can be prevented that the cutting resistance is excessively increased, and that the chips are pressed and cause a clogging. In addition, even though the chips partly collide against the protruded streak 11, the chips can be reliably broken. As a result, an efficient operation can be performed by disposing the chips smoothly.

In the present embodiment, the outer wall face 14 of the protruded streak 11 at the second front end portion 11C extends from the front end toward the rear end thereof as once approaching and then moving away from the side cutting edge 3 with respect to the adjacent side cutting edge 3 as seen in the plan view. Accordingly, when the insert body 1 is advanced in the axis L direction, and then, for example, the insert body 1 is fed in the transverse direction while being moved backward in order to broaden the groove width and form an inclined groove wall face, the chips flow out obliquely toward the front end of the cutting edge portion 2 since the insert body 1 moves backward. With respect to the chips flowing obliquely, the protruded curved outer wall face 14 extending so it is separated from the side cutting edge 3 can be located so as to face the chips. Therefore, even when the flow direction of the chips is varied, the cutting resistance can be reliably suppressed as described above; and the chips can be disposed smoothly and efficiently.

Especially, in the present embodiment, the outer wall face 14 and the protruded end face 15 of the protruded streak 11 form a circular arc intersection ridge at the second front end portion 11C; meanwhile, the outer wall face 14 protrudes in a circular arc shape as seen in the plan view. Accordingly, even when the flow direction of the chips is varied, the collision state of the chips against the outer wall face 14 does not vary excessively; therefore, the disposal of the chips can be stable. In addition, the center of the circular arc of the intersection ridge between the outer wall face 14 and the protruded end face 15 is located between the axis L and the circular arc as seen in the plan view. Accordingly, the radius R2 of the circular arc is small; therefore, a portion to which the chips collide is small and the chips can be bent tightly in the width direction. Thus, the resistance can further be reduced and the disposal ability of the chips can be improved.

In the present embodiment, the center of the circular arc of the intersection ridge of the outer wall face 14 and the protruded end face 15 is located between the axis L and the circular arc as seen in the plan view. However, the center may be located on the axis L as seen in the plan view; that is, the intersection ridges of the outer wall faces 14 and the protruded end faces 15 of the pair of protruded streaks 11 can be formed on one circle. Further, for example, as an insert body 101 of a second embodiment of the present invention shown in FIG. 9, the center of the circular arc of the outer wall face 114 of the protruded streak 111 may be located at the far side of the axis L as seen in the plan view so that the radius R12 is large.

In the second embodiment, it can be prevented that the portion of the outer wall face 114 to which the chips collide is too small so that the chips are not sufficiently broken by the bend, when most of portion of the side cutting edge 3 is used in order to broaden the groove width by cutting deep into the work material using the cutting edge portion 2, and then feeding the insert body 101 in the transverse direction. Note, in the second embodiment and modified embodiments of the first and second embodiments described below, the same portions as those of the first embodiment are denoted by the same reference symbols, and the description thereof is omitted.

However, even when the radius R12 of the outer wall face 114 of the protruded streak 111 protruding as seen in the plan view is large according to the second embodiment, if the radius is too large as in the cutting insert of JP H09-174308 in which it extends linearly, it is impossible to efficiently prevent the increase of the cutting resistance and the occurrence of the clogging of chips. Meanwhile, even when the radius R2 is small according to the first embodiment, if the radius is too small, then the protruded streaks 11 are small; therefore, it is impossible to dispose the chips by a suitable resistance, and for the chips to collide reliably against the protruded streaks 11 when the flow direction of the chips is varied.

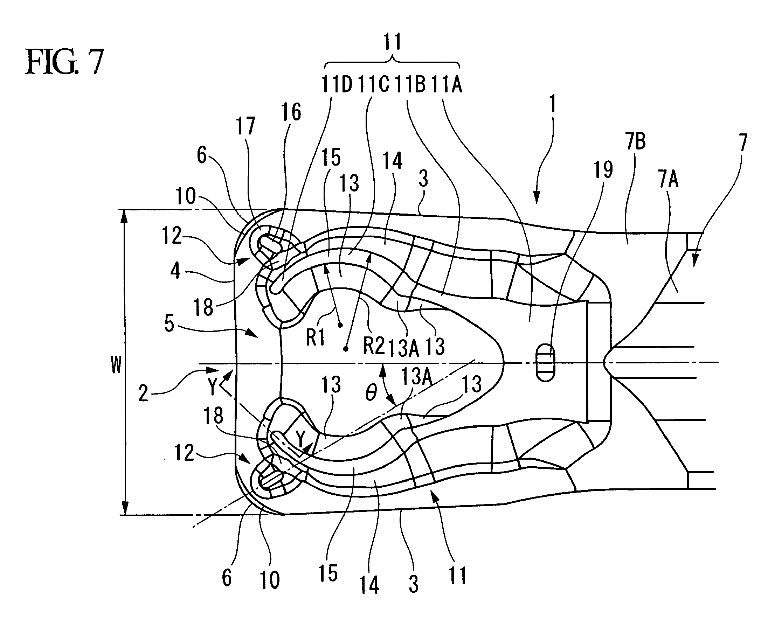

Considering that the protruded streaks 11 are formed on both sides of the side cutting edges 3 on the square rake face 5, as shown in FIGS. 7 and 9, it is preferable that the radius R2 be set in a range of 20% to 500% of the maximum width W of the rake face 5, that is, a width between a pair of external tangent lines to the rake face 5 that are parallel to the axis L as seen in the plan view. The intersection ridge of the outer wall face 14 and the protruded end face 15 of the protruded streak 11 in the first embodiment is the circular arc having the radius R2; the intersection ridge may be formed so as to have radius curvatures varied in the above range. Furthermore, it is unnecessary for the protruded streak 11 to have the flat protruded end face 15; for example, the cross section of the outer wall face 14 taken along a plane including the side cutting edges 3 and the corner portions 6 and perpendicular to the thickness direction may be a protruded curved line in the above range.

In the second embodiment, the protruded end face 115 of the protruded streak 111 at the first front end portion 111D is formed so that a portion (hereinafter, "extending portion") located on the bisector of the corner portion 6 as seen in the plan view is slightly broad while extending toward the corner portion 6. In a range from the extending portion to the front end of the protruded streak 111, the protruded end face 115 is formed so that the intersection ridge with the outer wall face 114 extends linearly and the width thereof becomes gradually smaller. Further, in a short range from the extending portion to a portion in which the outer wall face 114 forms a protruded curved face at the second front end portion 111C, the protruded streak 111 is formed so that the outer wall face 114 forms a recessed curved face and is contracted.

Furthermore, in the first and second embodiments, each of the outer wall faces 14, 114 are protruded toward each of the side cutting edges 3 as seen in the plan view only at each of the second front end portions 11C, 111C of each of the protruded streaks 11, 111. Each of the outer wall faces 14, 114 is recessed with respect to each of the adjacent side cutting edges 3 as seen in the plan view at each of the second rear end portions 11B, 111B and each of the first rear end portions 11A, 111A in which each of the protruded streaks 11, 111 are branched.

The front end of the side cutting edge 3 always generates the chips when feeding the insert bodies 1, 101 in the transverse direction in order to broaden the groove width, Meanwhile, there is a case in which the front end of the side cutting edge 3 is not used for cutting depending on the cutting depth of the cutting edge portion 2. Therefore, according to the first and second embodiments, since each of the outer wall faces 14, 114 of each of the protruded streaks 11, 111 is a recessed curved face at such portions, large pockets can be formed between the outer wall faces 14, 114 and the side cutting edge 3. Accordingly, the chips disposed at each of the outer wall faces 14, 114 of each of the second front end portions 11C, 111C can be smoothly discharged.

Generally, in a cutting operation such as grooving, cutting-off, or the like, the cutting fluid is supplied to the cutting portion of the cutting edge in order to lubricate and cool the cutting portion. However, in the first and second embodiments, the large pocket is secured between the outer wall faces 14, 114 and the side cutting edge 3 of the protruded streaks 11, 111 at the second rear end portions 11B, 111B. Therefore, the cutting fluid can be efficiently supplied to the front end of the side cutting edge 3 and the front cutting edge 4 via the pocket.

In the first and second embodiments, the projection 12 is formed between the corner portion 6 and each of the first front end portions 11D, 111D of each of the protruded streaks 11, 111; therefore, the chips generated at the corner portion 6 and the side cutting edge 3 when feeding the insert bodies 1, 101 in the transverse direction collide against the projection 12. Since the projection 12 is separated from the protruded streaks 11, 111, the entire of the chips will not contact with the projection 12 and the outer wall faces 14, 114 of the protruded streaks 11, 111; as a result, the resistance of the chips collision can be reduced.

Meanwhile, by colliding against the projection 12 and the protruded streaks 11, 111 separated from each other, similarly to a case in which the chips generated at the front cutting edge 4 collide against the projection 12 and the front end of the protruded streaks 11, 111 between the projection 12 and the protruded streaks 11, 111, the chips are curled and bent in the width direction thereof (that is, in the longitudinal direction of the insert bodies 1, 101). Accordingly, the chips are bent into a wavy shape in the width direction thereof with a portion which collides with the protruded curved outer wall faces 14, 114. Thus, the chips are bent also in the flow direction by rubbing against the projection 12 and the outer wall faces 14, 114 of the protruded streaks 11, 111; therefore, the chips can further reliably be broken and disposed according to the first and second embodiments.

Furthermore, in the first and second embodiments, the projection 12 and the protruded streaks 11, 111 are separated from each other, and the recessed portion 18 passing from the rear end to the front end of the cutting edge portion 2 is formed between each of the protruded streaks 11, 111 and the projection 12. Therefore, when grooving or cutting-off while supplying the cutting fluid, the cutting fluid can reliably be supplied to the front cutting edge 4 via the recessed portion 18.

Accordingly, it is possible to lubricate and cool the cutting portion using the front cutting edge 4 by supplying the cutting fluid; thus, the cutting resistance can be further reliably reduced. In addition, the damage and the adhesion of the front cutting edge 4 due to the heat of the cutting operation can be prevented; thus, the tool life of the cutting insert can be improved. Furthermore, in particularly the recessed portion 18 between each of the protruded streaks 11, 111 and the projection 12 opens toward the corner portion 6 at the front cutting edge 4; therefore, the damage to and the adhesion of this portion can reliably be prevented, and it is possible to finish the groove wall face by the grooving operation and the cutting surfaces by the cutting-off operation with high accuracy and quality. This is especially effective in a case in which the work material is hard to cut or has a low thermal conductivity, and the cutting heat cannot be easily radiated.

Furthermore, the projection 12 is formed between each of the first front end portions 11D, 111D of the protruded streaks 11, 111 extending toward the corner portion 6 and the corner portion 6. Accordingly, the chips can be reliably guided between the first front end portions 11D, 111D of the protruded streaks 11, 111 or between the protruded streaks 11, 111 and the projection 12 and disposed, even when grooving or cutting-off is performed at the front cutting edge 4 by advancing the insert bodies 1, 101 in the axis L direction, when the insert bodies 1, 101 is fed in the width direction in order to broaden the groove width, and in addition, when cutting a wall face of the groove formed at the work material or an end surface of the work material by advancing the insert bodies 1, 101 in the longitudinal direction and simultaneously feeding in the width direction or by reversing the insert bodies 1, 101 and simultaneously feeding in the width direction.

In the case in which the groove wall face or the end surface of the work material is cut by feeding the insert bodies 1, 101 in the width direction while simultaneously advancing, the chips are generated at each portion of the insert bodies 1, 101 extending from the backward corner portion 6 in the width feeding direction toward the front cutting edge 4, and flow out obliquely backward in the width feeding direction from the front cutting edge 4 toward the rear of the axis L direction. The chips collide with the projection 12 between the backward corner portion 6 in the width feeding direction and the first front end portions 11D, 111D of the protruded streaks 11, 111. As a result, the chips are guided so as to flow along the axis L, in contact with the protruded streaks 11, 111 backward in the width feeding direction, or rolled inside this protruded streaks 11, 111 and curled.

Meanwhile, in the case in which the groove wall face or the end surface of the work material is cut by feeding the insert bodies 1, 101 in the width direction while simultaneously moving backward, the chips are cut at a front portion of the side cutting edge 3 extending from the forward corner portion 6 in the width feeding direction toward the rear of the axis L direction. The chips flow out obliquely backward in the width feeding direction toward the front of the axis L direction. However, the projection 12 is also formed between the forward corner portion 6 in the width feeding direction and the protruded streaks 11, 111 in the flow out direction with respect to the side cutting edge 3 at which the chips are generated. Therefore, the chips that collide with the projection 12 are guided so as to flow along the width direction perpendicular to the axis L; accordingly, similarly to the case in which the insert bodies 1, 101 are fed only in the transverse direction for cutting, the chips collide with the projection 12 and the outer wall face 14 of the protruded streak 11, and are disposed. That is, even when the insert bodies 1, 101 are fed obliquely, the chips can be reliably disposed by the cutting inserts having the above configurations.

In addition, the projection 12 of the first and second embodiments is formed so that the protruded end face 16 thereof has an oval shape as seen in the plan view, and extends from the protruded streaks 11, 111 at the first front end portions 11D, 111D toward the corner portion 6. Accordingly, the chips that collide with the projection 12 when broadening the groove width by feeding the insert body in the width direction can flow out toward the rear end of the cutting edge portion 2 along the direction in which the projection 12 extends. Therefore, the chips generated at the side cutting edge 3 and curled in the flow direction along the width direction of the insert bodies 1, 101 can be prevented from being in contact with the groove wall face directly and damaging the groove wall face; as a result, it is possible to perform a cutting operation with higher accuracy and quality.

In the present embodiment, the extending direction of the projection 12 extending toward the corner portion 6, that is, the longitudinal axis direction of the oval of the protruded end face 16 of the projection 12 is set so as to intersect in an angle θ of 15° to 75° with respect to the axis L. If the angle θ is too small and the projection 12 extends substantially parallel to the longitudinal direction of the insert bodies 1, 101, that is, the projection 12 extends substantially parallel to the extending direction of the side cutting edge 3, the chips flow out in the width direction of the insert bodies 1, 101, are rolled and in contact with the groove wall face. On the contrary, if the angle θ is too large and the projection 12 extends substantially perpendicular to the side cutting edge 3 as seen in the plan view, the chips collide with the projection 12 at a point and it is difficult to stably guide the chips; furthermore, there is a possibility of the projection 12 being worn in an early stage.

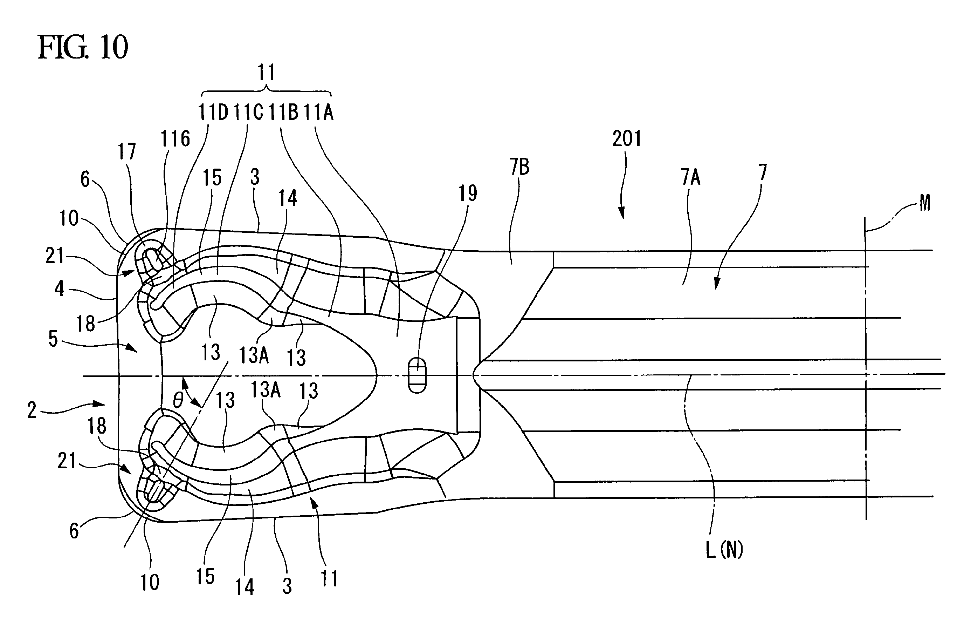

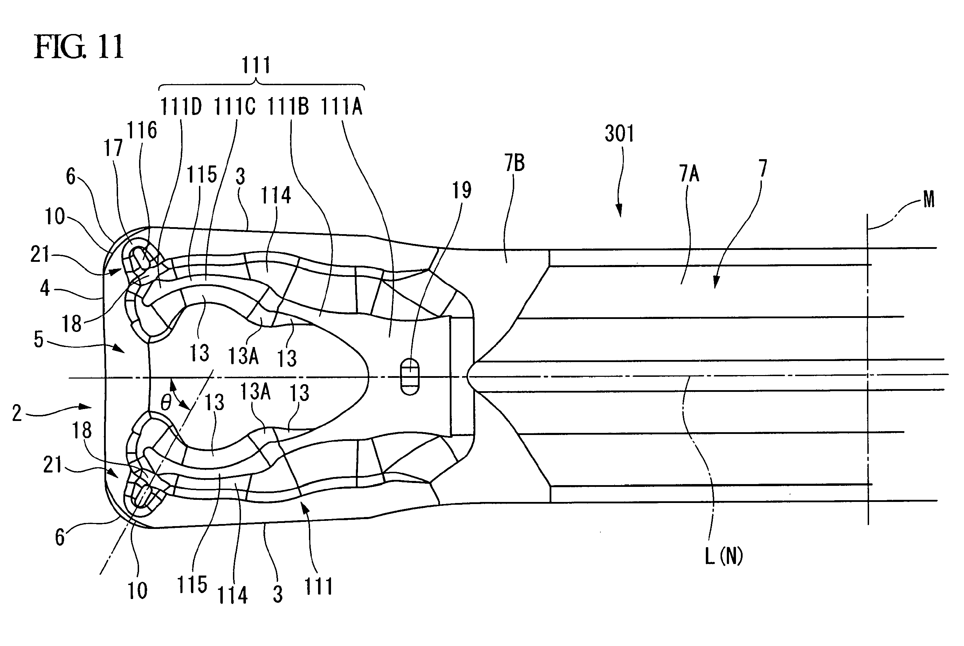

In the first and second embodiments, the angle θ in which the extension direction of the projection 12 is formed with respect to the axis L as seen in the plan view is smaller than an angle in which the bisector of the corner portion 6 is formed with respect to the axis L. If the angle θ is within the above range, as insert bodies 201, 301 of first modifications of the first and second embodiments shown in FIGS. 10 and 11 respectively, the angle θ in which the extending direction of a projection 21 having a protruded end face 116 is formed with respect to the axis L may be larger than the angle in which the bisector of the corner portion 6 is formed with respect to the axis L, In addition, the angle θ in the first modifications is set to 60°. According to the first modifications in which the angle θ is large, when grooving or cutting-off is operated by feeding the insert bodies 201, 301 in the axis L direction, the cutting fluid can be supplied to a broad area, i.e., not only the front cutting edge 4 by the corner portion 6, but also the corner portion, through the recessed portion 18. Accordingly, the resistance can further be reduced, and the heat damage and the adhesion can further be prevented.

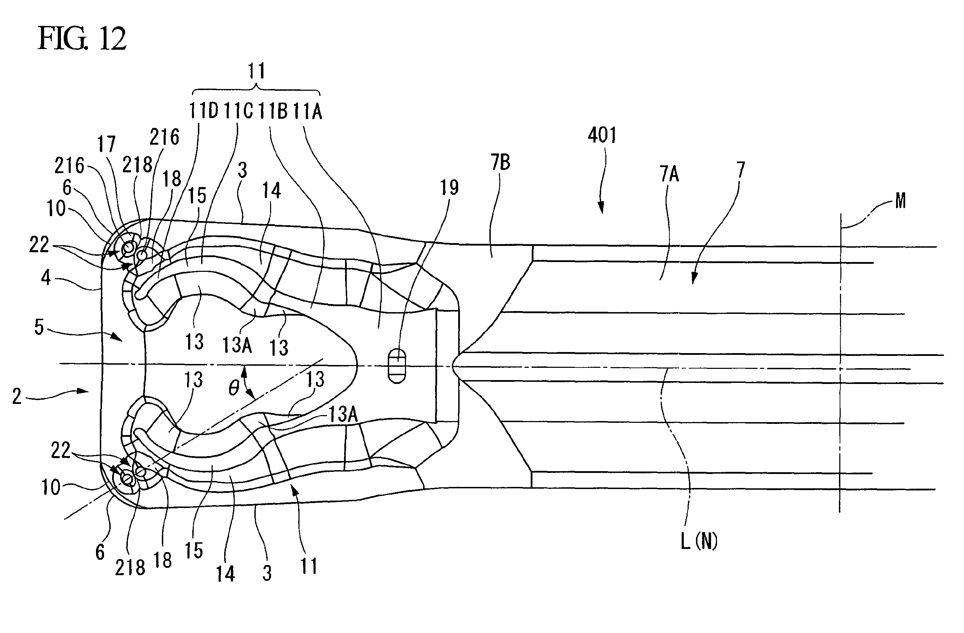

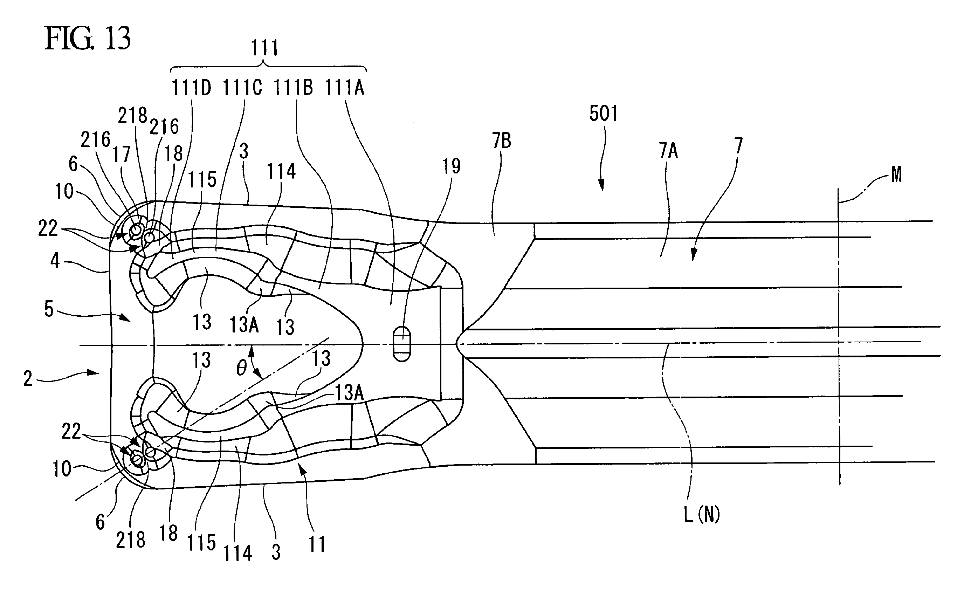

In the first and second embodiments and the first modification thereof, the projections 12, 21 are formed so that the protruded end faces 16, 116 have an oval shape extending toward the corner portion 6 inseparably. In insert bodies 401, 501 of the second modification of the first and second embodiments shown in FIGS. 12 and 13, a plurality of projections 22, for example, each having a protruded end face 216 and a truncated conical shape or the like, may be formed so as to be arranged with a predetermined distance discontinuously from the first front end portions 11D, 111D of the protruded streaks 11, 111 toward the corner portion 6. In this case, the cutting fluid can be supplied to the front cutting edge 4 through a recessed portion 218 between the projections 22 in addition to the recessed portion 18 between the projection 22 and the protruded streaks 11, 111. Accordingly, an amount of the cutting fluid can be increased.

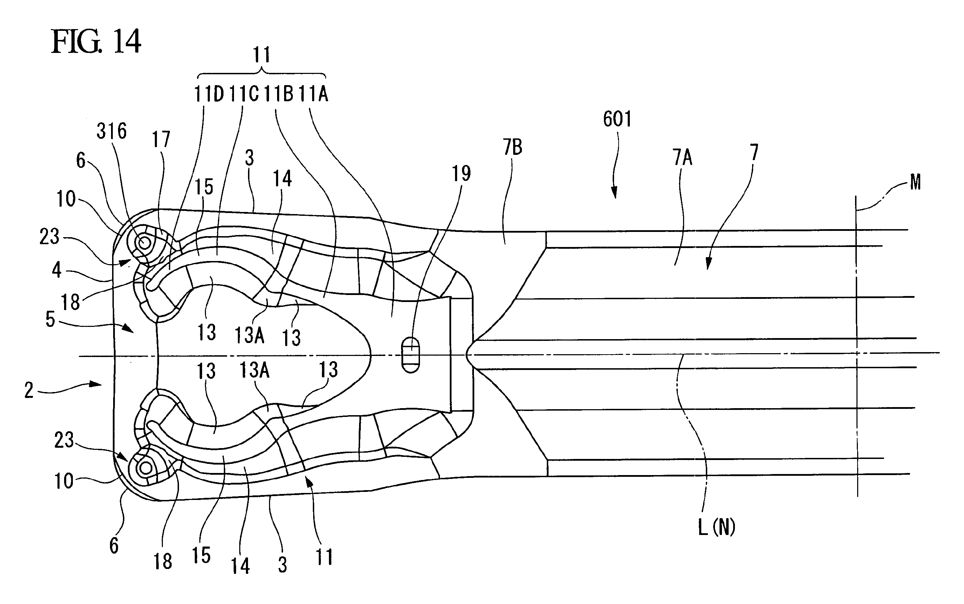

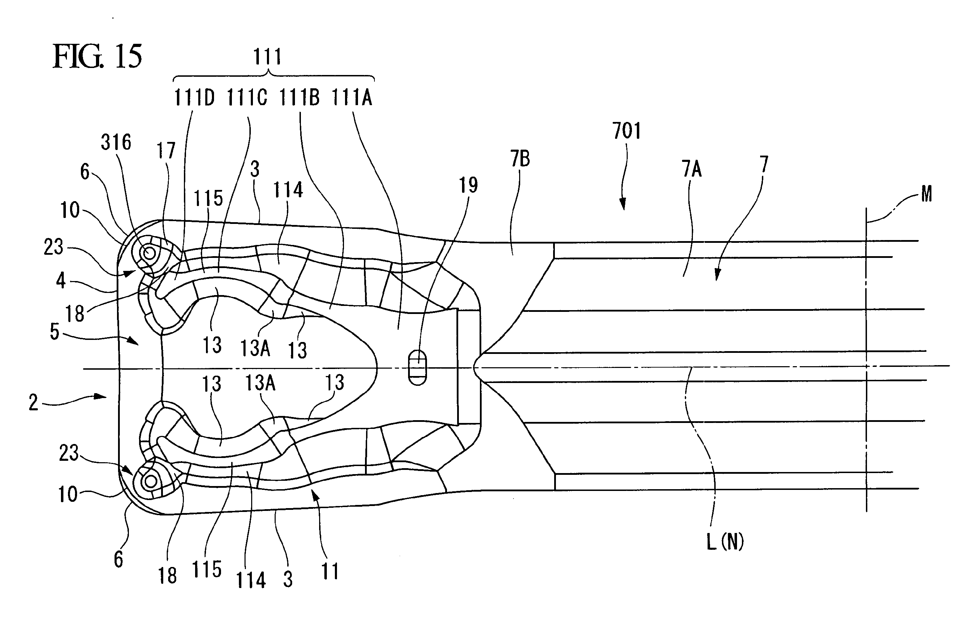

Furthermore, if a cutting insert is used only for grooving or cutting-off of a work material and not used for broadening a groove width, the cutting insert can be provided with a truncated conical projection 23 each having a protruded end face 316 or a spherical projection which is not deviated in the shape at each of spaces between the first front end portions 11D, 111D of the protruded streaks 11, 111 and the corner portions 6 as insert bodies 601, 701 of a third modification of the first and second embodiments respectively shown in FIGS. 14 and 15. In this case, a distance between the projection 23 and the first front end portions 11D, 111D or the corner portion 6 is broad; therefore, an amount of the cutting fluid supplied to the front cutting edge 4 can be increased, thereby improving the efficient lubrication and cooling.

Also in these modifications, the projections 21 to 23 are smaller than the protruded streaks 11, 111D. That is, in the first modification in which the protruded end face 116 of the projection 21 is an oval shape, similarly to the first and second embodiments, a width of a minor axis direction of the protruded end face 116 is substantially the same as or smaller than the width of the protruded end face 15, 115 of the protruded streaks 11, 111 at the first front end portions 11D, 111D; and a length of a longitudinal direction of the protruded end face 116 is smaller than that of the protruded end faces 15, 115.

Further, if the projection 22, 23 has the truncated conical shape or the spherical shape and the protruded end faces 216, 316 are circular as in the second and third modifications, a diameter of each of the circular protruded end faces 216, 316 is substantially the same as or smaller than the width of the protruded end faces 15, 115 of the protruded streaks 11, 111 at the first front end portions 11D, 111D.

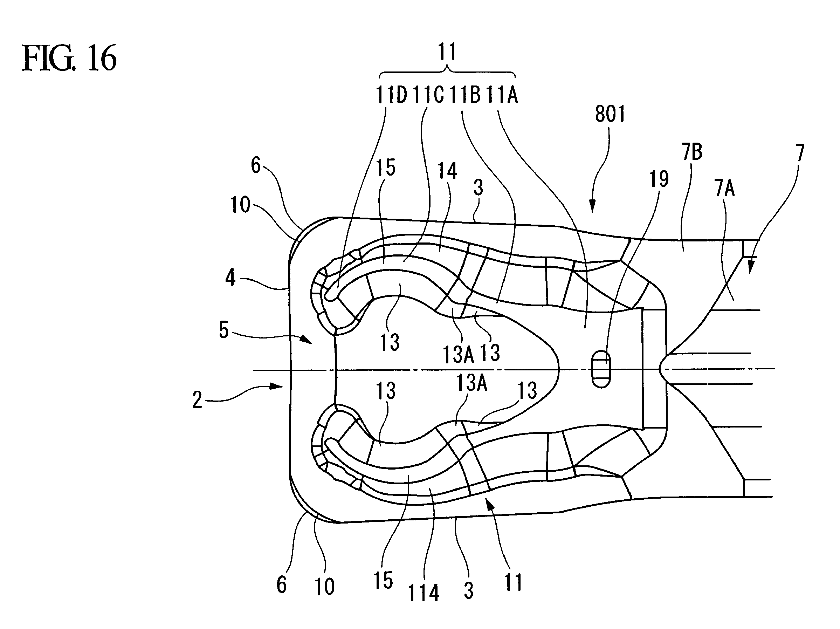

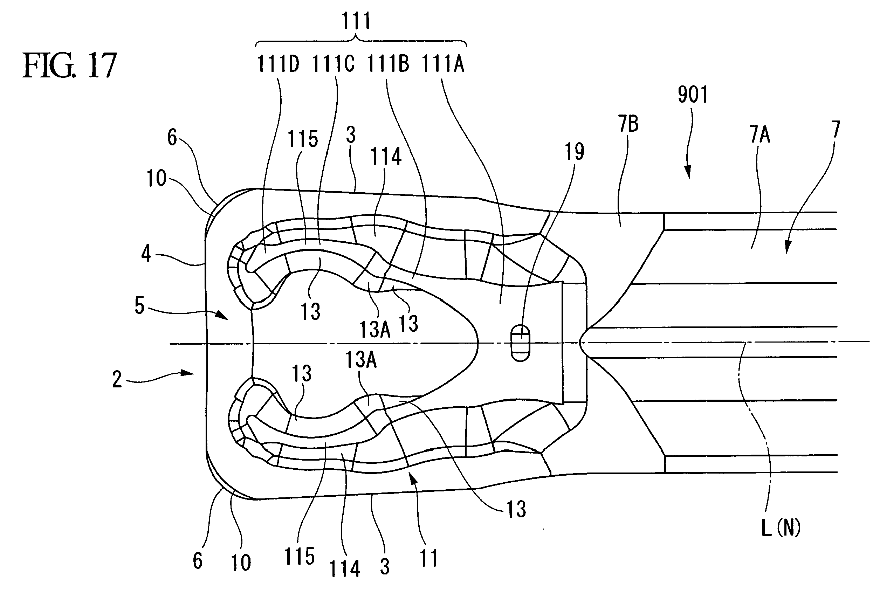

However, it is unnecessary to form the projections 12, 21 to 23; the rake face 5 may connect the corner portion 6 and the first front end portions 11D, 111D of the protruded streaks 11, 111 as insert bodies 801, 901 of a fourth modification of the first and second embodiments shown respectively in FIGS. 16 and 17. In the fourth modification, the first front end portions 11D, 111D of the protruded streaks 11,111 and the corner portion 6 are not partitioned; therefore, the amount of the cutting fluid supplied to the front cutting edge 4 can be further increased, so that it is possible to lubricate and cool efficiently.

## Claims

1. A cutting insert having an insert body having a shaft-shape, wherein
a cutting edge portion having a square rake face is formed on an end portion of the insert body, and wherein the rake face comprises:
a pair of side cutting edges extending in a longitudinal direction of the insert body;
a front cutting edge extending in a transverse direction perpendicular to the longitudinal direction between each front ends of the side cutting edges; and
a pair of protruded streaks extending toward a corner portion at which each of the side cutting edges intersects the front cutting edge, each of the protruded streaks including an outer wall face having a protruded curved face which faces the adjacent side cutting edge and protrudes toward the side cutting edge as seen in a direction facing the rake face and perpendicular to the longitudinal direction.

2. The cutting insert according to Claim 1, wherein the outer wall face is a protruded curved face which gradually approaches to and separates from the side cutting edge from a front toward a rear of the adjacent side cutting edge as seen in the direction facing the rake face and perpendicular to the longitudinal direction.

3. The cutting insert according to one of the preceding claims, wherein the outer Wall face has a circular-arc shape as Seen in die direction facing die rake face and perpendicular to the longitudinal direction.

4. The cutting insert according to one of the preceding claims, wherein each of the protruded streaks is formed so that the outer wall face at a front end thereof has a protruded curved shape, and at a rear end thereof has a recessed curved face with respect to the adjacent side cutting edge as seen in the direction facing the rake face and perpendicular to the longitudinal direction.

5. The cutting insert according to one of the preceding claims , further comprising a projection which is formed on the rake face between the corner portion and a front end of each of the protruded streaks in the vicinity of the corner portion, so as to project at a predetermined distance with each of the protruded streaks.

6. The cutting insert according to Claim 5, wherein the projection extends from the front ends of the protruded streaks toward the corner portion.

7. The cutting insert according to Claim 6, wherein the projection extends so as to intersect an axis of the longitudinal direction at an angle of 15° to 75° as seen in the direction facing the rake face and perpendicular to the longitudinal direction.

8. The cutting insert according to Claim 5, wherein a plurality of the projections is provided between each of front ends of the protruded streaks and the corner portion, separated from each other.
